(19)

Europäisches
Patentamt
European
Patent Office
Office européen
des brevets

(11)     **EP 1 809 121 B1**

(12)                    **EUROPEAN PATENT SPECIFICATION**

(45) Date of publication and mention
of the grant of the patent:
**27.08.2008 Bulletin 2008/35**

(21) Application number: **05798861.0**

(22) Date of filing: **26.10.2005**

(51) Int Cl.:
*A23G 9/04* *(2006.01)*     *A23G 9/08* *(2006.01)*
*A23G 9/10* *(2006.01)*     *A23G 9/12* *(2006.01)*
*A23G 9/18* *(2006.01)*     *A23G 9/22* *(2006.01)*
*F25C 1/12* *(2006.01)*     *F25C 5/02* *(2006.01)*

(86) International application number:
**PCT/EP2005/011558**

(87) International publication number:
**WO 2006/048190 (11.05.2006 Gazette 2006/19)**

(54) **METHOD AND APPARATUS FOR PARTIALLY FREEZING AN AQUEOUS MIXTURE**

VERFAHREN UND VORRICHTUNG ZUR HERSTELLUNG VON TEILWEISE GEFRORENEN
WÄSSRIGEN MISCHUNGEN

PROCÉDÉ ET DISPOSITIF DE CONGÉLATION PARTIELLE D'UNE MÉLANGE AQUEUX

(84) Designated Contracting States:
**AT BE BG CH CY CZ DE DK EE ES FI FR GB GR
HU IE IS IT LI LT LU LV MC NL PL PT RO SE SI
SK TR**

(30) Priority: **08.11.2004 EP 04256913**

(43) Date of publication of application:
**25.07.2007 Bulletin 2007/30**

(73) Proprietors:
• **Unilever PLC
London
Greater London EC4P 4BQ (GB)**
Designated Contracting States:
**CY GB IE**
• **Unilever N.V.
3013 AL Rotterdam (NL)**
Designated Contracting States:
**AT BE BG CH CZ DE DK EE ES FI FR GR HU IS IT
LI LT LU LV MC NL PL PT RO SE SI SK TR**

(72) Inventors:
• **ALLIN, Jonathan, Mark
Worthing West Sussex BN14 9QH (GB)**
• **JARVIS, Daniel Anthony,
Unilever R&D Vlaardingen
3133 AT Vlaardingen (NL)**
• **MARRIOTT, Christopher Donald
Bedford,
Bedfordshire MK44 1LQ (GB)**
• **RUSSELL, Andrew Baxter
Bedford MK44 1LQ (GB)**

(74) Representative: **Hugot, Alain
Unilever plc, Patent Group
Colworth House, Sharnbrook
Bedford MK44 1LQ (GB)**

(56) References cited:
**DE-A1- 2 916 310          US-A- 3 411 309
US-A- 4 170 881**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

**Description**

**Technical Field of the Invention**

The present invention relates to a method and an apparatus for partially freezing an aqueous mixture to form a dispersion of ice crystals, and hence to produce a water ice slush, frozen milkshake, ice cream or similar product.

**Background**

Conventionally, ice cream or water ice slushes are produced by placing a mixture, which is an aqueous solution and / or suspension of the ingredients, in contact with a freezing surface. A layer of ice forms on the surface. In order to prevent the formation of very large ice crystals and to maintain good heat transfer between the freezing surface and the mixture, it is necessary continuously to remove the layer of ice. This has been achieved by mechanically scraping the ice layer from the freezing surface, for example in factory ice cream freezers (also known as scraped surface heat exchangers), domestic ice cream freezers, and in water ice slush machines such as those used in cafes and convenience stores. This requires the provision of a scraping mechanism and a driving mechanism. These features significantly add to the size and complexity of the production equipment. Furthermore scraping imposes a substantial energy cost, via the friction on the scraping device which originates from overcoming the adhesion force of the ice to the surface.

EP0584127 describes an alternative means of de-icing a freezing surface using high frequency sound waves (ultrasound). Ultrasound is believed to set up a resonance in the freezing surface causing it to flex and bend thereby detaching the ice. This allows ice generation without scraping and has the advantage of simplifying the equipment since it does require moving parts. However, this method has several drawbacks. Engineering the freezing surface to allow ultrasonic resonance presents severe restrictions on the size and design of the device. Also, the use of ultrasound can lead to unpleasant high-pitched noise, which may not be acceptable in a factory or public environment.

One of the big problems faced when making water ice slushes, ice creams and frozen milk shakes is therefore to prevent the build up of ice on the freezing surface without resorting to complex or expensive equipment. Thus there is a need for a simple method of removing ice from freezing surfaces.

US 4170881 and DE 2916310 describe both a method and apparatus for freezing aqueous liquids by using an oscillating freezing surface.

It has now been discovered that it is possible to release ice from a freezing surface which is in contact with an aqueous mixture by linearly oscillating the freezing surface at low frequencies.

**Tests and definitions**

Partial freezing of an aqueous mixture means freezing the mixture such that only part of the water in the mixture is converted into ice crystals, such that the partially frozen product is suitable for pumping, moulding, extruding, pouring, drinking, spooning and the like.

The freezing point of the aqueous mixture means the equilibrium freezing point of a solution of the initial concentration. The equilibrium freezing point of a solution is lower than the equilibrium freezing point of the pure solvent due to freezing point depression. When a solution is partially frozen, the concentration of the solution increases because water is removed in the form of pure ice crystals (this is known as freeze concentration). Therefore the freezing point decreases further. The freezing point of an aqueous mixture can be determined by methods well known to those skilled in the art.

The terms "milk shake", "water ice" and "ice cream" have the meanings as stated in Chapter 1 of Ice Cream 4th Edition - W.S. Arbuckle - AVI Publishing, 1986, except that in the context of the present invention, "ice cream" also encompasses compositions comprising vegetable fats.

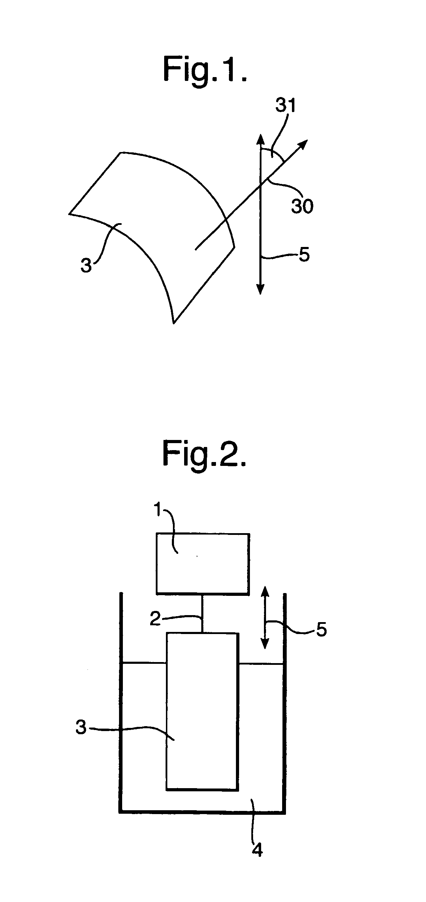

The angle between the direction of oscillation and the freezing surface at any particular point on the surface means (90 - theta) where theta is the smaller of the two angles between the vector normal to the surface at that point and the oscillation direction, as shown in Figure 1.

Measurement of the temperature of the freezing surface

The temperature of the freezing surface is measured by attaching a self-adhesive thermocouple (T-type, Omega Engineering Ltd, 1 Omega Drive, Riverbound Technology Centre, Northbank, Irlam, Manchester, M44 5BD, UK) to the freezing surface.

Release of ice from the freezing surface

Release of ice from the freezing surface is assessed by visual inspection of the freezing surface. Ice release is judged to be successful when no ice adheres to the surface at the end of the freezing process.

Estimation of Ice Content

The concentration of a solution in equilibrium at a temperature between its freezing point and its glass transition temperature is given by the freezing point curve on the phase diagram. (The phase diagram for sucrose solutions can be found in S. Ablett, M.J. Izzard, P.J. Lillford J. Chem Soc Faraday Trans. 88 (1992) 789). For example, at -2.2°C, the sucrose concentration in equilibrium with ice is 22% (w/w). If the initial concentration of the solution was 20% w/w then the amount of ice formed can be estimated as follows.

$$\text{Sucrose concentration (\% w/w)} = \text{mass of sucrose / mass of solution}$$
$$= \text{mass sucrose / (total mass} - \text{mass of ice)}$$
$$22\% = 20 / (100 - x) * 100$$

where x = % (w/w) ice = 9.8% in this example.

**Brief description of the invention**

It is the first object of the present invention to provide a method for partially freezing an aqueous mixture comprising simultaneously or in either order the steps of: placing said aqueous mixture in contact with at least part of a freezing surface, cooling said freezing surface to below the freezing point of said aqueous mixture, so that ice forms at the freezing surface; and oscillating said freezing surface relative to said aqueous mixture in a direction that is not perpendicular to at least part of the freezing surface and wherein the angle between the direction of oscillation and the majority of the freezing surface is less than 45°, characterised in that the oscillation is linear with a frequency of between 20 and 200Hz.

Preferably the frequency of the oscillation is between 40Hz and 100Hz. More preferably the frequency of the oscillation is between 50Hz and 80Hz. It has been found that the higher the frequency of the oscillation within these ranges, the better is the removal of ice from the freezing surface.

Preferably the amplitude of the oscillation is between 0.2mm and 20mm. More preferably the amplitude of the oscillation is between 1mm and 15mm. Most preferably the amplitude of the oscillation is between 4mm and 10mm. It has been found that the larger the amplitude of the oscillation within these ranges, the better is the removal of ice from the freezing surface.

The oscillation may be of any suitable waveform, for example sinusoidal, square wave or saw tooth. Preferably the oscillation is sinusoidal.

It is desirable that the rate of partial freezing of the aqueous mixture should be as rapid as possible, so that the rate of production of the partially frozen product, such as water ice slush, ice cream or frozen milkshake, is maximized. It is believed that the rate of partial freezing depends on (at least) three factors: the rate of formation of ice at the freezing surface, the area of the freezing surface and the rate of release of ice from the freezing surface.

It has been found that the more closely the freezing surface is parallel to the direction of oscillation, the faster the release of ice from the freezing surface. The shape of the freezing surface is therefore chosen so that the angle between the direction of oscillation and the majority of the freezing surface is less than 45°. For example the freezing surface comprises the surface of a rod with its axis is parallel to the direction of oscillation. Preferably the freezing surface is the surface of a cylinder with its axis parallel to the direction of oscillation. More preferably, the cylinder is vertical and the lower end of the cylinder comprises a protrusion. Most preferably the protrusion is a hemisphere or a cone.

It has been found that the larger the area of the freezing surface, the more ice is generated. The shape of the freezing surface is chosen to have a large surface area. Preferably, the freezing surface comprises the inner and outer surfaces of a cylindrical tube with its axis parallel to the direction of oscillation.

The freezing surface can comprise the surfaces of a plurality of members which are rigidly mounted onto a single base. Preferably the members comprise cylinders with their axes parallel to the direction of oscillation. More preferably the cylinders are vertical and lower end of the cylinder comprises a protrusion. Most preferably the protrusion is a hemisphere or a cone. Alternatively the members comprise cylindrical tubes with their axes parallel to the direction of oscillation.

The area of the freezing surface can be increased by the addition of fins. The fins may be flat plates or may be shaped, for example twisted, to enhance axial mixing in the aqueous mixture. Preferably one or more fins are attached to the freezing surface.

The strength of the adhesion of the ice to the freezing surface depends on the temperature of the freezing surface, and also on the type of solute in the aqueous mixture. It has been found that for temperatures in the range of 0°C to -20°C, the lower the temperature of the freezing surface, the stronger the adhesion. However, the higher the temperature of the freezing surface, the slower the rate of formation of ice (The temperature of the freezing surface must be below the freezing point of the aqueous mixture in order to form ice.). Thus the optimal temperature of the freezing surface for a particular aqueous mixture is determined by a compromise between these two opposing effects. It has been found that a rapid rate of ice formation and easy release is achieved when the temperature of the freezing surface is between -1°C and -20°C. Preferably the temperature of the freezing surface is below -5°C. Equally preferably the temperature of the freezing surface is above -10°C. Most preferably the temperature of the freezing surface is between -5°C and -10°C.

It has further been found that the ice removal can be enhanced without significantly reducing the rate of ice formation by cycling the temperature of the freezing surface from a temperature between 5°C and 25°C below the freezing point of the aqueous mixture to a temperature more than 0°C and less than 5°C below the freezing point of the aqueous mixture.

The freezing surface is cooled by any suitable cooling means, for example by flowing a coolant, such as aqueous ethylene glycol or Freon, through the interior of the member whose surface comprises the freezing surface.

It has been found that the method of the present invention can be used to produce partially frozen foods or drinks when a suitable aqueous mixture is used. Preferably the aqueous mixture comprises an aqueous solution and / or suspension of edible ingredients selected from the group consisting of sugars, food acids, colours, flavours, proteins, fats emulsifiers and stabilisers. More preferably the aqueous mixture is a milk shake, water ice mix or an ice cream mix.

It is a second object of the invention to provide an apparatus for partially freezing an aqueous mixture comprising a freezing surface, a cooling means capable of cooling said freezing surface to below -1°C, and an oscillation means coupled to said freezing surface characterised in that said oscillating means is capable of linearly oscillating said freezing surface relative in a direction that is not perpendicular to at least part of the freezing surface and wherein the angle between the direction of oscillation and the majority of the freezing surface is less than 45°, with a frequency of between 20 and 200Hz.

Preferably the oscillation means is capable of oscillating the freezing surface with an amplitude of between 1 mm and 20mm.

Preferably the cooling means is capable of cooling the freezing surface to below -5°C, more preferably to below -10°C.

It is desirable that the apparatus should be simple and inexpensive. Preferably the oscillation means is a loud speaker, a magnetic coil, an electrodynamic shaker or a reciprocating electric motor.

The oscillation means may be coupled to the freezing surface by direct coupling, or by a resilient member, or by a cantilever beam. It has been found that direct coupling provides a simple, inexpensive means of coupling. It has been further found that a cantilever beam is suitable for oscillating heavy freezing surfaces. It has also been found that by coupling the freezing surface to the oscillation means with a resilient member, such as a flexible beam or a spring, and oscillating at its resonant frequency, large amplitude oscillations can be obtained.

The shape of the freezing surface is chosen so that the angle between the direction of oscillation and the majority of the freezing surface is less than 45°. For example the freezing surface comprises the surface of a rod with its axis is parallel to the direction of oscillation. Preferably the freezing surface is the surface of a cylinder with its axis parallel to the direction of oscillation. More preferably, the cylinder is vertical and the lower end of the cylinder comprises a protrusion. Most preferably the protrusion is a hemisphere or a cone.

The freezing surface can comprise the surfaces of a plurality of members which are rigidly mounted onto a single base which is oscillated by a single oscillation means. This avoids the necessity for more than one oscillation means. Preferably the members comprise cylinders with their axes parallel to the direction of oscillation. More preferably the cylinders are vertical and lower end of the cylinder comprises a protrusion. Most preferably the protrusion is a hemisphere or a cone. Alternatively the members comprise cylindrical tubes with their axes parallel to the direction of oscillation.

## Detailed Description

The present invention will be further described by reference to the drawings, wherein;

Figure 1 illustrates the definition of the angle between the direction of oscillation and the freezing surface.

Figure 2 represents a schematic view of the apparatus according to the second aspect of the invention, together with an aqueous mixture.

Figure 3 represents a freezing surface in accordance with the invention, comprising a cylinder with a hemispherical protrusion on its lower end.

Figure 4 represents a freezing surface in accordance with the invention, comprising a cylindrical tube.

Figure 5 represents a freezing surface in accordance with the invention, to which fins are attached.

Figure 6 represents a freezing surface in accordance with the invention, comprising a plurality of members rigidly mounted on a single base which is oscillated by a single driving mechanism.

Figure 7 represents a detailed diagram of the apparatus in accordance with the second aspect of the invention wherein the oscillation means is a loudspeaker with a resilient beam coupling.

Figure 1 shows freezing surface **3**, the vector **30** normal to a point on the freezing surface **3** and the direction of oscillation **5**. The angle **31** is the smaller of the two angles between the vector **30** normal to the surface and the oscillation direction **5**. The angle between the direction of oscillation and the freezing surface is given by (90°- angle **31**).

Figure 2 represents a schematic view of the apparatus, together with an aqueous mixture. In Figure 2 the oscillation means **1** is coupled to the freezing surface **3** by means of a coupling **2**. The freezing surface **3** is immersed in an aqueous mixture **4**. The oscillation means **1** oscillates freezing surface **3** in direction **5**.

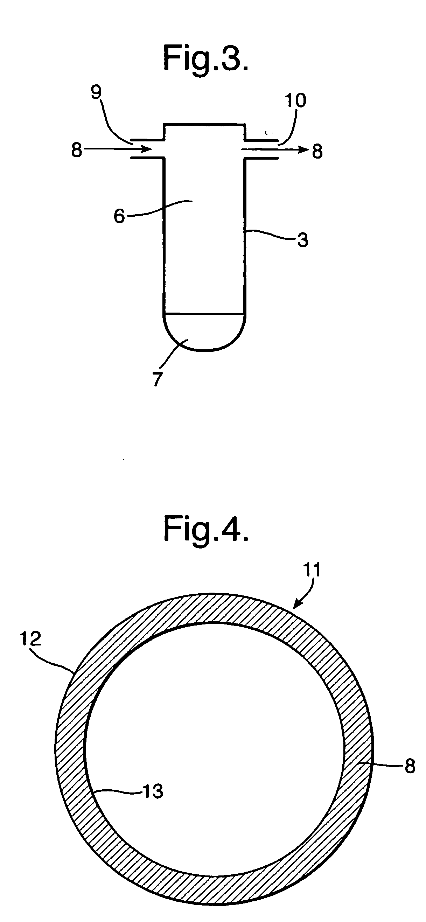

Figure 3 represents a freezing surface **3** comprising a cylinder **6** with a hemispherical protrusion **7** on its lower end. The temperature of freezing surface **3** is controlled by flowing a coolant liquid **8** through cylinder **6** via inlet **9** and outlet **10**.

Figure 4 shows a cross-sectional view of a cylindrical tube **11**. The tube has outer surface **12** and inner surface **13** which together comprise the freezing surface. The tube is hollow to allow the freezing surface to be cooled with coolant liquid **8**.

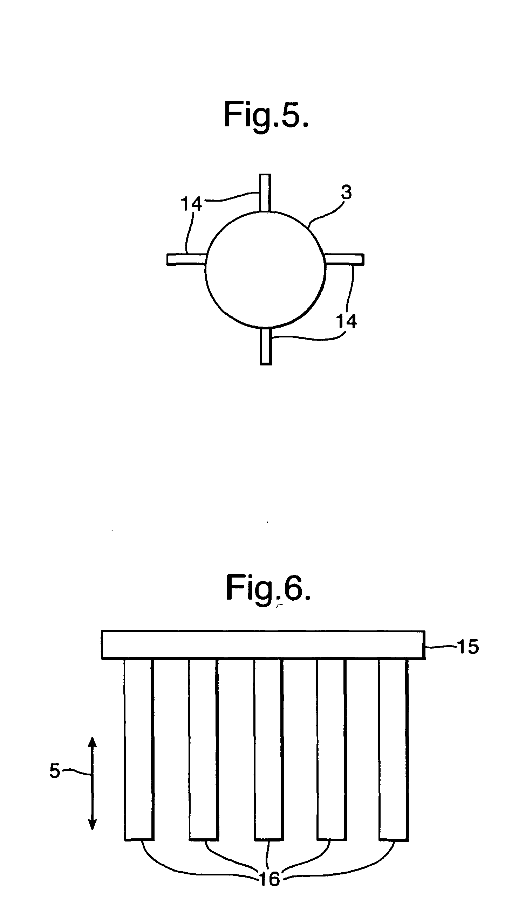

Figure 5 shows a top view of a freezing surface **3** to which fins **14** are attached. They may consist of flat plates or may be shaped so as to enhance mixing of the aqueous mixture.

Figure 6 represents a freezing surface comprising a plurality of members **16** rigidly mounted on a single base **15** which can be oscillated in direction **5** by a single oscillation means.

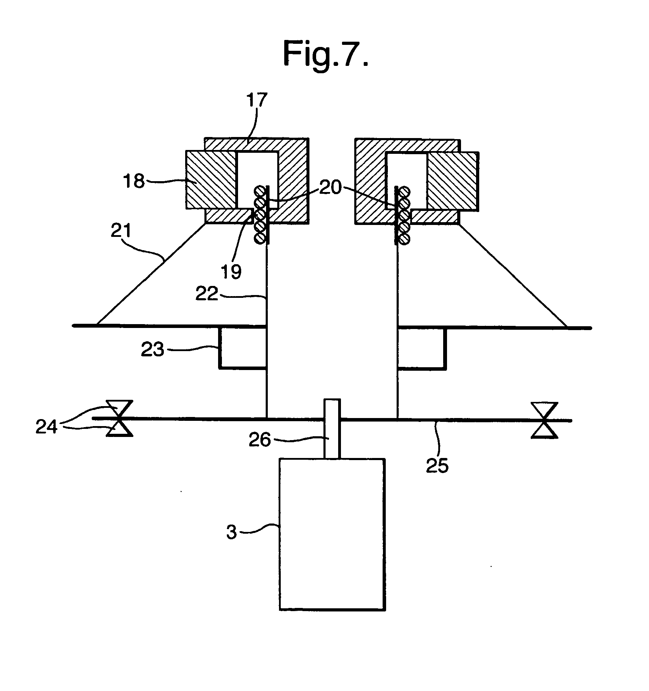

Figure 7 shows an oscillation means consisting of a loudspeaker (with its speaker cone removed) comprising a magnet **17,** pole pieces **18**, coil **19** and frame **20**. A lightweight tube **21** is attached to the tube **22** around which the coil is wrapped. A linear bearing **23** provides axial alignment for the tube **21**. The tube is coupled to the freezing surface **3** by means of a resilient beam **25** and rod **26**. The beam is supported at both ends on knife edges **24** and the freezing surface 3 is attached to the centre of the beam.

The present invention will be further described with reference to the following examples which are illustrative only and non-limiting.

Example 1: freezing surfaces of various shapes

(a) A vertical hollow copper cylinder with length 90mm, diameter 16mm and wall thickness 1 mm was directly coupled at its upper end to an electrodynamic shaker (model V406, Ling Dynamic Systems Ltd, Royston, Herts, UK). The lower end of the cylinder was closed by a flat plate. An aqueous solution of 50% w/w ethylene glycol at -20°C was passed through the interior of the cylinder by means of a Haake refrigerated circulator. The cylinder was sinusoidally oscillated along its longitudinal axis at a frequency of 60Hz and an amplitude of 6mm. A cup containing 250ml of a 20%w/w sucrose solution, initially at a temperature close to 0°C, was positioned under the cylinder so that the cooled cylinder was fully immersed in the solution. Ice continually formed on the curved surface of the cylinder and was released into the solution by the oscillation. Ice also formed on the flat end of the cylinder, but was not removed and continued to build up over time.

(b) An identical cylinder was constructed except that it had a hemispherical protrusion at its free end rather than a flat plate. Use of this cylinder under the same conditions resulted in successful release of ice from the entire surface and no build-up at the free end.

(c) A third freezing surface consisting of a cylindrical tube with length 115mm, outer diameter 42mm, inner diameter 34mm and wall thickness 0.9mm was constructed from aluminium. The surface was polished. The mass of the cylinder when empty was 118g. The tube was cooled by flowing coolant through the walls. Use of this cylinder under the same conditions resulted in the formation of patches of ice on the inner and outer surfaces of the tube. The ice was released into the surrounding solution by the oscillation.

Example 2: amplitude and frequency of oscillation

Without wishing to be limited by theory, it is believed that the ice is removed from the surface by the shear force between the ice layer on the freezing surface and the aqueous mixture. This is related to the maximum acceleration of the surface during the oscillation in the direction parallel to the surface. The larger the maximum acceleration, the greater the ice removal force. Increasing both the amplitude and frequency of the oscillation increases the maximum acceleration. The amplitude and frequency of the oscillation required to remove the ice from the freezing surface depends on the strength of the adhesion of the ice, which in turn depends on the temperature of the surface and the nature and concentration of the solutes in the aqueous mixture. Increasing the frequency or the amplitude of the oscillation has been found to increase the de-icing ability of the freezing surface.

The cylindrical tube was used as described in Example 1(c) to partially freeze a 20% w/w sucrose solution using a 50% w/w ethylene glycol at -20°C as the coolant. The frequency and amplitude of oscillation were varied. At each frequency the minimum amplitude required to release ice from the freezing surface was as follows:

20% sucrose, -20°C

| Frequency (Hz) | Amplitude (mm) |
|---|---|
| 150 | ≥ 1.5 |
| 100 | ≥ 2 |
| 80 | ≥ 2.5 |
| 60 | ≥ 3 |
| 40 | ≥ 5 |

Thus at any given frequency, ice release can be achieved when the amplitude of the oscillation is increased above a certain value.

Example 3: effect of solution concentration

The experiment of example 2 was repeated using a 30% w/w sucrose solution. Ice release was achieved under the following conditions:

30% sucrose, -20°C

| Frequency (Hz) | Amplitude (mm) |
|---|---|
| 150 | ≥ 1 |
| 100 | ≥ 1.5 |
| 80 | ≥ 2 |
| 60 | ≥ 2.5 |
| 40 | ≥ 4 |

Thus it can be seen by comparing Examples 2 and 3. that the amplitude and frequency required for ice release depend on the concentration of the solution. Increasing the sucrose concentration from 20 to 30% w/w reduced the amplitude required for release at any given frequency.

Example 4: effect of coolant temperature

The experiment of example 2 was repeated using an ethylene glycol solution at -10°C. Ice release was achieved under the following conditions:

20% sucrose, -10°C

| Frequency (Hz) | Amplitude (mm) |
|---|---|
| 150 | ≥ 0.5 |
| 100 | ≥ 1 |
| 60 | ≥ 1.5 |
| 40 | ≥ 3 |
| 20 | ≥ 5 |

Thus it can be seen by comparing Examples 2 and 4 that the amplitude and frequency required for ice release depend on the temperature of the freezing surface (which depends on the temperature of the coolant). Increasing the temperature of the coolant sucrose concentration from -10 to -20°C reduced the amplitude required for release at any given frequency.

Example 5: effect of cycling the temperature of the freezing surface

The experiment of example 2 was repeated but with the flow of ethylene glycol through the finger stopped periodically (20s on, 20s off) causing the temperature of the freezing surface to rise and fall periodically. The temperature was measured as specified above using a thermocouple placed on the outside surface of the cylinder, approximately 40mm from the upper end and close to the coolant inlet port.

The ice was released more easily when the surface temperature was periodically cycled. This is due to the lower adhesion at higher surface temperatures. This enabled a 10% sucrose solution to be partially frozen using the amplitude and frequency corresponding to that which enabled a 20% sucrose solution to be partially frozen without temperature cycling.

Example 6: Effect of changing solute

The experiment of example 2 was repeated using an 8% glycerol solution instead of 20% sucrose solution. Ice release was obtained under the following conditions:

8% sucrose, -20°C

| Frequency (Hz) | Amplitude (mm) |
|---|---|
| 150 | ≥ 1 |
| 100 | ≥ 2 |
| 80 | ≥ 2.5 |
| 60 | ≥ 3 |
| 40 | ≥ 5 |

Thus it can be seen by comparing Examples 2 and 6 that the amplitude and frequency required for ice release depend on the nature of the solute as well as the concentration of the solution. Ice release occurs with approximately the same conditions for 8 % w/w glycerol as for 20% w/w sucrose.

Example 7: Ice content after 2 minutes freezing

The experiment of example 2 was repeated. The cylinder was placed in the 20% sucrose solution and oscillated at a frequency of 60Hz. Three experiments were performed with different amplitudes. In each case the cylinder was placed in the solution for a period of 2 minutes, after which the partially frozen mixture was gently stirred and its temperature was measured using a Comark temperature probe. The ice content was estimated from the temperature using the method described above and the results were as follows.

| Amplitude (mm) | Temperature (°C) | Ice content (%w/w) |
|---|---|---|
| 4 | -1.6 | 5 |
| 6 | -1.7 | 10 |
| 8 | -1.8 | 13 |

Higher ice contents were achieved at higher displacements because the more effective de-icing process allowed higher rates of heat transfer to be achieved.

Example 8: Production of a water ice slush

A mixture was prepared with the following composition:

|  | (%w/w) |
|---|---|
| Sucrose | 10 |
| Dextrose monohydrate | 6 |
| 63 DE low fructose corn syrup | 6 |
| Citric acid | 0.6 |
| Potassium sorbate | 0.03 |
| Lemon and lime flavour | 0.03 |
| Water | to 100 |

This was partially frozen using the set-up described in example 2 with an oscillation frequency of 60Hz and an amplitude of 8mm. The temperature was measured after 2 minutes to be -2.3°C. The resulting product was judged to contain sufficient ice and to be an acceptable slush ice drink.

Example 9: Production of an ice cream

A basic ice cream mix was prepared with the following composition:

|  | (%w/w) |
|---|---|
| Sucrose | 20 |
| Skim milk powder | 10 |
| Milk fat | 10 |
| Water | to 100 |

This was frozen using the set-up described in example 2 with an oscillation frequency of 60Hz and an amplitude of 8mm. The temperature was measured after 2 minutes to be - 4.9°C. The resulting product was judged to contain sufficient ice and to be an acceptable soft ice cream.

Example 10: Cantilever beam coupling

A larger freezing surface consisting of a cylindrical tube was constructed from copper. The mass of the cylinder when empty was approximately 1 kg. The directly coupled electrodynamic shaker was not capable of oscillating the heavy tube with sufficiently large amplitude. Instead the tube was coupled to the shaker by a steel cantilever beam (255mm x 75mm x 10mm). One end of the beam was clamped to a large block of steel (the fixed end) and the other was attached to the tube (the free end). The beam was driven by a pushrod attached to the shaker between the fixed end and the free end. The system was tuned to resonance by sweeping the oscillation frequency until maximum amplitude was obtained. The resonant frequency depends on the length of the beam, so the beam was chosen such that its first bending resonant frequency was the chosen operating frequency (50Hz). Ice release was obtained in a 20% sucrose solution with using an ethylene glycol solution at -10°C as the coolant at amplitudes of 2.4mm and above.

Example 11: Loudspeaker with a resilient beam coupling

An alternative oscillation means was constructed from a 100W loudspeaker with the speaker cone removed.

8

A lightweight tube was attached to the tube around which the coil is wrapped. A linear bearing was provided to provide axial alignment for the tube. The linear bearing consisted of two perspex plates spaced 20mm vertically apart with concentric holes through which the tube could slide. The tube was coupled to the freezing surface which consisted of a copper cylinder (diameter 22mm, length 110mm) by means of a resilient beam and rod. The beam was supported at both ends on knife edges and the freezing surface was attached to the centre of the beam. The beam was chosen so that its resonant frequency matched the operating frequency (50Hz). Large oscillation amplitudes (> 10mm) could be achieved with this arrangement.

The various features of the embodiments of the present invention referred to in individual sections above apply, as appropriate, to other sections *mutatis mutandis*. Consequently features specified in one section may be combined with features specified in other sections as appropriate.

All publications mentioned in the above specification are herein incorporated by reference. Various modifications and variations of the described methods and products of the invention will be apparent to those skilled in the art without departing from the scope of the invention. Although the invention has been described in connection with specific preferred embodiments, it should be understood that the invention as claimed should not be unduly limited to such specific embodiments. Indeed, various modifications of the described modes for carrying out the invention which are apparent to those skilled in the relevant fields are intended to be within the scope of the following claims.

**Claims**

1.    A method for partially freezing an aqueous mixture comprising simultaneously or in either order the steps of:

placing said aqueous mixture in contact with at least part of a freezing surface;
cooling said freezing surface to below the freezing point of said aqueous mixture; so that ice forms at the freezing surface; and
oscillating said freezing surface relative to said aqueous mixture in a direction that is not perpendicular to at least part of the freezing surface; and wherein the angle between the direction of oscillation and the majority of the freezing surface is less than 45°,

**characterised in that** the oscillation is linear with a frequency of between 20 and 200Hz.

2.    A method according to claim 1 wherein the frequency of the oscillation is between 40 and 100Hz.

3.    A method according to claim 1 wherein the amplitude of the oscillation is between 0.2mm and 20mm.

4.    A method according to claim 1 wherein the amplitude of the oscillation is between 4mm and 10mm.

5.    A method according to claim 1 wherein the freezing surface is the surface of a cylinder with its axis parallel to the direction of oscillation.

6.    A method according to claim 5 wherein the freezing surface is the surface of a vertical cylinder the lower end of which comprises a hemispherical protrusion.

7.    A method according to claim 1 wherein the freezing surface comprises the inner and outer surfaces of a cylindrical tube with its axis parallel to the direction of oscillation.

8.    A method according to claim 1 wherein the freezing surface comprises the surfaces of a plurality of members which are rigidly mounted onto a single base.

9.    A method according to claim 8 wherein the members are cylinders or cylindrical tubes with their axes parallel to the direction of oscillation

10.    A method according to any preceding claim in which the temperature of the freezing surface is between -1°C and -20°C.

11.    A method according to any one of claims 1 to 9 in which the temperature of the freezing surface is cycled from a temperature between 5°C and 25°C below the freezing point of the aqueous mixture to a temperature more than 0°C and less than 5°C below the freezing point of the aqueous mixture.

12. A method according to any preceding claim wherein the aqueous mixture comprises an aqueous solution and / or suspension of edible ingredients selected from the group consisting of sugars, food acids, colours, flavours, proteins, fats emulsifiers and stabilisers.

13. A method according to claim 12 in which the aqueous mixture is a milk shake, water ice mix or an ice cream mix.

14. An apparatus for partially freezing an aqueous mixture comprising:

   a freezing surface;
   a cooling means capable of cooling said freezing surface to below -1°C and
   an oscillation means which is coupled to said freezing surface

   **characterised in that** said oscillating means is capable of linearly oscillating said freezing surface in a direction that is not perpendicular to at least part of the freezing surface and wherein the angle between the direction of oscillation and the majority of the freezing surface is less than 45°,with a frequency of between 20 and 200 Hz.

15. An apparatus according to claim 14 wherein the oscillation means is capable of oscillating said freezing surface with an amplitude of between 1 mm and 20mm

16. An apparatus according to claim 14 wherein the oscillation means is selected from the group consisting of a loud speaker, a magnetic coil, an electrodynamic shaker and a reciprocating electric motor.

17. An apparatus according to claim 14 wherein the oscillation means is coupled to the freezing surface by a coupling means selected from the group consisting of direct coupling, a resilient member, and a cantilever beam.

18. An apparatus according to claim 14 wherein the freezing surface comprises the surfaces of a plurality of members rigidly mounted onto a single base and which are capable of being oscillated by a single oscillation means.


**Patentansprüche**

1. Verfahren zum teilweisen Gefrieren eines wässrigen Gemischs, das gleichzeitig oder in irgendeiner Reihenfolge die folgenden Schritte umfasst:

   Herstellen eines Kontakts zwischen dem wässrigen Gemisch und wenigstens einem Teil einer Gefrieroberfläche;
   Abkühlen der Gefrieroberfläche unter den Gefrierpunkt des wässrigen Gemischs, so dass sich an der Gefrieroberfläche Eis bildet; und
   Versetzen der Gefrieroberfläche in Oszillationen in Bezug auf das wässrige Gemisch in einer Richtung, die zu wenigstens einem Teil der Gefrieroberfläche nicht senkrecht ist; wobei der Winkel zwischen der Oszillationsrichtung und dem größten Teil der Gefrieroberfläche kleiner als 45° ist,

   **dadurch gekennzeichnet, dass** die Oszillation linear ist und eine Frequenz im Bereich von 20 bis 200 Hz hat.

2. Verfahren nach Anspruch 1, wobei die Oszillationsfrequenz im Bereich von 40 bis 100 Hz liegt.

3. Verfahren nach Anspruch 1, wobei die Amplitude der Oszillation im Bereich von 0,2 mm bis 20 mm liegt.

4. Verfahren nach Anspruch 1, wobei die Amplitude der Oszillation im Bereich von 4 mm bis 10 mm liegt.

5. Verfahren nach Anspruch 1, wobei die Gefrieroberfläche die Oberfläche eines Zylinders ist, dessen Achse zu der Oszillationsrichtung parallel ist.

6. Verfahren nach Anspruch 5, wobei die Gefrieroberfläche die Oberfläche eines vertikalen Zylinders ist, dessen unteres Ende einen halbkugelförmigen Vorsprung aufweist.

7. Verfahren nach Anspruch 1, wobei die Gefrieroberfläche die innere und die äußere Oberfläche eines zylindrischen Rohrs umfasst, dessen Achse zu der Oszillationsachse parallel ist.

8. Verfahren nach Anspruch 1, wobei die Gefrieroberfläche die Oberflächen mehrerer Elemente umfasst, die an einer einzigen Basis starr montiert sind.

9. Verfahren nach Anspruch 8, wobei die Elemente Zylinder oder zylindrische Rohre sind, deren Achsen zu der Oszillationsrichtung parallel sind.

10. Verfahren nach einem vorhergehenden Anspruch, wobei die Temperatur der Gefrieroberfläche im Bereich von -1 °C bis -20 °C liegt.

11. Verfahren nach einem der Ansprüche 1 bis 9, wobei die Temperatur der Gefrieroberfläche von einer Temperatur im Bereich von 5 °C bis 25 °C unterhalb des Gefrierpunkts des wässrigen Gemischs bis zu einer Temperatur von mehr als 0 °C und weniger als 5 °C unterhalb des Gefrierpunkts des wässrigen Gemischs zyklisch geändert wird.

12. Verfahren nach einem vorhergehenden Anspruch, wobei das wässrige Gemisch eine wässrige Lösung und/oder eine Suspension von Nahrungszutaten umfasst, die aus der Gruppe ausgewählt sind, die aus Zuckern, Lebensmittelsäuren, Farben, Aromastoffen, Proteinen, Fettemulgatoren und Stabilisierern besteht.

13. Verfahren nach Anspruch 12, wobei das wässrige Gemisch ein Milchshake, ein Wasser/Eis-Gemisch oder ein Eiskremgemisch ist.

14. Vorrichtung zum teilweisen Gefrieren eines wässrigen Gemischs, die umfasst:

   eine Gefrieroberfläche;
   ein Kühlungsmittel, das die Gefrieroberfläche auf unterhalb von -1 °C abkühlen kann, und
   ein Oszillationsmittel, das mit der Gefrieroberfläche gekoppelt ist,

   **dadurch gekennzeichnet, dass** das Oszillationsmittel die Gefrieroberfläche in einer Richtung, die wenigstens zu einem Teil der Gefrieroberfläche nicht senkrecht ist, mit einer Frequenz im Bereich von 20 bis 200 Hz linear oszillieren lassen kann, wobei der Winkel zwischen der Oszillationsrichtung und dem größeren Teil der Gefrieroberfläche kleiner als 45° ist.

15. Vorrichtung nach Anspruch 14, wobei das Oszillationsmittel die Gefrieroberfläche mit einer Amplitude im Bereich von 1 mm bis 20 mm oszillieren lassen kann.

16. Vorrichtung nach Anspruch 14, wobei das Oszillationsmittel aus der Gruppe ausgewählt ist, die aus einem Lautsprecher, einer Magnetspule, einem elektrodynamischen Schüttler und einem hin und her beweglichen Elektromotor besteht.

17. Vorrichtung nach Anspruch 14, wobei das Oszillationsmittel mit der Gefrieroberfläche durch ein Kopplungsmittel gekoppelt ist, das aus der Gruppe ausgewählt ist, die aus einer direkten Kopplung, einem elastischen Element und einem Ausleger besteht.

18. Vorrichtung nach Anspruch 14, wobei die Gefrieroberfläche die Oberflächen mehrerer Elemente umfasst, die an einer einzigen Basis starr angebracht sind und durch ein einziges Oszillationsmittel zu Oszillationen veranlasst werden können.

**Revendications**

1. Méthode destinée à congeler partiellement un mélange aqueux comprenant simultanément ou dans n'importe quel ordre les étapes consistant à :

   ♦ placer ledit mélange aqueux en contact avec au moins une partie d'une surface de congélation ;
   ♦ refroidir ladite surface de congélation à une température en dessous du point de congélation dudit mélange aqueux ; de sorte que de la glace se forme au niveau de la surface de congélation ; et
   ♦ faire osciller ladite surface de congélation par rapport audit mélange aqueux dans une direction qui n'est pas perpendiculaire à au moins une partie de la surface de congélation ; l'angle entre la direction d'oscillation et la majorité de la surface de congélation étant inférieur à 45°,

**caractérisée en ce que** l'oscillation est linéaire avec une fréquence comprise entre 20 et 200 Hz.

2. Méthode selon la revendication 1, dans laquelle la fréquence de l'oscillation est comprise entre 40 et 100 Hz.

3. Méthode selon la revendication 1, dans laquelle l'amplitude de l'oscillation est comprise entre 0,2 mm et 20 mm.

4. Méthode selon la revendication 1, dans laquelle l'amplitude de l'oscillation est comprise entre 4 mm et 10 mm.

5. Méthode selon la revendication 1, dans laquelle la surface de congélation est la surface d'un cylindre avec son axe parallèle à la direction d'oscillation.

6. Méthode selon la revendication 5, dans laquelle la surface de congélation est la surface d'un cylindre vertical dont l'extrémité inférieure comprend une saillie hémisphérique.

7. Méthode selon la revendication 1, dans laquelle la surface de congélation comprend les surfaces interne et externe d'un tube cylindrique avec son axe parallèle à la direction d'oscillation.

8. Méthode selon la revendication 1, dans laquelle la surface de congélation comprend les surfaces d'une pluralité d'éléments qui sont montés de façon rigide sur une seule base.

9. Méthode selon la revendication 8, dans laquelle les éléments sont des cylindres ou des tubes cylindriques avec leurs axes parallèles à la direction d'oscillation.

10. Méthode selon l'une quelconque des revendications précédentes, dans laquelle la température de la surface de congélation est comprise entre -1° C et -20°C.

11. Méthode selon l'une quelconque des revendications 1 à 9, dans laquelle la température de la surface de congélation suit un cycle d'une température entre 5°C et 25°C en dessous du point de congélation du mélange aqueux à une température supérieure à 0°C et inférieure à 5°C en dessous du point de congélation du mélange aqueux.

12. Méthode selon l'une quelconque des revendications précédentes, dans laquelle le mélange aqueux comprend une solution aqueuse et/ou suspension d'ingrédients comestibles choisis dans le groupe comprenant les sucres, les acides alimentaires, les colorants, les arômes, les protéines, les graisses, les émulsifiants et les stabilisants.

13. Méthode selon la revendication 12, dans laquelle le mélange aqueux est un lait fouetté, un mélange de glace à l'eau ou un mélange de crème glacée.

14. Appareil destiné à congeler partiellement un mélange aqueux comprenant :

   ♦ une surface de congélation ;
   ♦ des moyens de refroidissement capables de refroidir ladite surface de congélation à une température en dessous de -1°C ; et
   ♦ des moyens d'oscillation qui sont couplés à ladite surface de congélation

   **caractérisé en ce que** lesdits moyens d'oscillation sont capables de faire osciller linéairement ladite surface de congélation dans une direction qui n'est pas perpendiculaire à au moins une partie de la surface de congélation et dans lequel l'angle entre la direction d'oscillation et la majorité de la surface de congélation est inférieur à 45°, avec une fréquence comprise entre 20 et 200 Hz.

15. Appareil selon la revendication 14, dans lequel les moyens d'oscillation sont capables de faire osciller ladite surface de congélation avec une amplitude comprise entre 1 mm et 20 mm.

16. Appareil selon la revendication 14, dans lequel les moyens d'oscillation sont choisis dans le groupe comprenant un haut-parleur, une bobine magnétique, un agitateur électrodynamique et un moteur électrique alternatif.

17. Appareil selon la revendication 14, dans lequel les moyens d'oscillation sont couplés à la surface de congélation par des moyens de couplage choisis dans le groupe comprenant un couplage direct, un élément élastique et une poutre en porte-à-faux.

**18.** Appareil selon la revendication 14, dans lequel la surface de congélation comprend les surfaces d'une pluralité d'éléments montés de façon rigide sur un seul socle et qui sont capables d'osciller grâce à des moyens d'oscillation uniques.

# Fig.1.

# Fig.2.

# Fig.3.

# Fig.4.

## Fig.5.

## Fig.6.

## Fig.7.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 0584127 A
- US 4170881 A

- DE 2916310

**Non-patent literature cited in the description**

- **W.S. ARBUCKLE.** Ice Cream. AVI Publishing, 1986

- **S. ABLETT ; M.J. IZZARD ; P.J. LILLFORD.** *J. Chem Soc Faraday Trans.,* 1992, vol. 88, 789